# EUROPÄISCHE PATENTSCHRIFT

(11) **EP 2 325 452 B1**
(45) Veröffentlichungstag und Bekanntmachung des Hinweises auf die Patenterteilung: **27.05.2015**
(21) Anmeldenummer: 10010243.3
(22) Anmeldetag: 23.09.2010
(51) Int. Cl.: F01N 3/28, F01N 3/20

(54) **Vorrichtung zur Nachbehandlung von Abgasen von Brennkraftmaschinen**
Device for treating exhaust gases of internal combustion engines
Dispositif de traitement de gaz d'échappement de moteurs à combustion interne

(30) Priorität: 19.11.2009 DE 102009053950
(43) Veröffentlichungstag der Anmeldung: 25.05.2011
(73) Patentinhaber: MAN Truck & Bus AG, 80995 München (DE)
(72) Erfinder: Döring, Andreas, 82008 München (DE); Tilinski, Marco, 90571 Schwaig (DE); Kistner, Andreas, 91732 Merkendorf (DE); Klingsporn, Andreas, 90610 Winkelhaid (DE); Seidel, Petra, 90547 Stein (DE)

(56) Entgegenhaltungen:
- WO-A1-2010/034651
- DE-A1- 4 203 807

## Beschreibung

Die Erfindung betrifft eine Vorrichtung zur Nachbehandlung von Abgasen von Brennkraftmaschinen, insbesondere von magerlauffähigen Brennkraftmaschinen von Kraftfahrzeugen, gemäß dem Oberbegriff des Patentanspruches 1.

Der Einsatz von SCR-Katalysatoren zur Reduzierung der Stickoxide in einem Abgasstrom einer Brennkraftmaschine ist allgemein bekannt. Im Rahmen der mit diesen SCR-Katalysatoren durchgeführten selektiven katalytischen Reduktion (SCR) wird dem Abgasstrom eine unmittelbar reduzierend wirkende Substanz, wie beispielsweise Ammoniak oder ein Vorprodukt zugeführt, das erst im Abgas reduzierende Substanzen freisetzt. Als Vorprodukt kann beispielsweise eine wässrige Harnstofflösung verwendet werden.

Bei in Kraftfahrzeugen betriebenen Brennkraftmaschinen gestaltet sich die Stickoxidreduzierung mit Hilfe des SCR-Verfahrens deshalb schwierig, weil dort wechselnde Betriebsbedingungen vorherrschen, was die mengenmäßige Zumessung des Reduktionsmittels erschwert. Es soll zwar einerseits ein möglichst hoher Umsatz an Stickoxiden erreicht werden, andererseits ist aber auch darauf zu achten, dass es nicht zur unnötigen Emission von unverbrauchtem Reduktionsmittel, wie beispielsweise Ammoniak kommt.

Im Zusammenhang mit der Zersetzung von Harnstoff in Ammoniak ist es bekannt, dass dies unter optimalen Bedingungen, das heißt Temperaturen über 350°C, in zwei Stufen geschieht. Nach

(NH₂)₂ CO → NH₃ + HNCO

erfolgt zunächst die Thermolyse, das heißt die thermische Zersetzung von Harnstoff. Anschließend erfolgt nach

HNCO +H₂O → NH₃ + CO₂

die Hydrolyse, also die katalytische Zersetzung von Isocyansäure (HNCO) in Ammoniak (NH₃) und Kohlendioxid (CO₂).

Da das Reduktionsmittel bei der zum Beispiel Verwendung der als AdBlue® bezeichneten Reduktionsflüssigkeit in einer in Wasser gelösten Form vorliegt, muss dieses Wasser vor und während der eigentlichen Thermolyse und Hydrolyse verdampfen. Liegen die Temperaturen bei den beiden vorstehenden Reaktionen unter 350°C bzw. wird nur langsam erhitzt, bildet sich hauptsächlich feste unschmelzbare Cyanursäure durch Trimerisierung der Isocyansäure, was zu festen Ablagerungen oder gar zur Verstopfung des SCR-Katalysators führt. Abhilfe kann hier, wie in der DE 40 38 054 A1 beschrieben, dadurch geschaffen werden, dass der mit dem Reduktionsmittel beladene Abgasstrom über einen Hydrolysekatalysator geführt wird. Die Abgastemperatur, bei der eine quantitative Hydrolyse möglich wird, lässt sich so auf 160°C absenken.

Um die Katalysatoren zu verkleinern, aber die Verweilzeit in den Katalysatoren konstant zu lassen, können die Hydrolysekatalysatoren auch in einem Abgasteilstrom betrieben werden, der dem Abgasstrom entnommen und nach erfolgter Hydrolyse diesem wieder zugeführt wird. Eine entsprechende Anordnung ist der EP 1052009 A1 zu entnehmen. Allerdings löst dieses Verfahren bei zu niedrigen Abgastemperaturen das Problem der nur teilweisen Harnstoffhydrolyse noch nicht vollständig.

Daher ist es vorteilhaft, dass die Entnahme des Abgasteilstroms möglichst motornah erfolgt, um den Hydrolysekatalysator auf einem hohen Temperaturniveau betreiben zu können. Bei abgasaufgeladenen Brennkraftmaschinen ist es weiter vorteilhaft, den Abgasteilstrom bereits vor dem Turbolader zu entnehmen und ihn stromab des Turboladers wieder zurückzuführen.

Trotz all dieser Maßnahmen gelingt es oft nicht, die Bildung von Cyanursäure, Melamin oder anderen unerwünschten festen Reaktionsprodukten zu vermeiden, insbesondere, wenn die NH₃-Vorläufersubstanz, wie Harnstoff oder die Harnstoffwasserlösung und das Abgas nicht gleichmäßig über den gesamten Strömungsquerschnitt verteilt sind. Besonders kritisch ist hierbei, wenn lokal große Mengen an Reduktionsmittel auf Rohrwandungen oder Harnstoffzersetzungskatalysatoren treffen, während sich gleichzeitig an dieser Stelle ein lokales Minimum der Strömungsgeschwindigkeit befindet. Dies hat zur Folge, dass vom Abgas keine ausreichend hohen Wärmemengen zur Verfügung gestellt werden kann, um eine quantitative Zersetzung des Reduktionsmittels in NH₃ sicherzustellen. Vielmehr bilden sich an diesen Stellen die bereits erwähnten Ablagerungen aus unerwünschten Reduktionsmittelzersetzungsprodukten.

Verstärkt wird dieser Effekt noch durch die Tatsache, dass in Fahrzeugen nur ein sehr beschränkter Bauraum für die Aufbereitung des Reduktionsmittels zur Verfügung steht, was zur Folge hat, dass speziell bei der Anströmung von Katalysatoren die Einlauflängen sehr kurz ausfallen, was wiederum eine sehr schlechte Gleichverteilung über den Katalysatorquerschnitt auf Grund von Strömungstotzonen, Querschnittssprüngen und/oder Strömungsabrissen nach sich zieht.

Weitere Vorrichtungen zur Abgasnachbehandlung zeigen beispielsweise die DE 42 03 807 A1 oder die DE 43 08 542 A1, bei denen dem Abgasstrom über eine Düse einer Dosiereinrichtung eine wässrige Harnstofflösung als Reduktionsmittel zugeführt wird, das in einem nachgeschalteten Hydrolysekatalysator durch thermische und katalytische Reaktion in NH₃ und CO₂ umgewandelt wird. In dem stromab des Hydrolysekatalysators angeordneten SCR-Katalysator (Selektive katalytische Reduktion) werden dann die im Abgasstrom enthaltenen Stickoxide NOx in hohem Maße zu Stickstoff und Wasserdampf reduziert.

Die internationale Anmeldung WO 2010/045651 A1 ist als Stand der Technik gemäß Art. 54(3) EPÜ zu würdigen, da der Anmeldetag vor und der Tag der Veröffentlichung nach dem Anmeldetag der vorliegenden Anmeldung liegt. WO 2010/045651 A1 lehrt ein Abgasreinigungssystem für Dieselmotoren, bei dem zumindest ein Oxidationskatalysator, eine Reduktionsmittelsprühvorrichtung und ein Reduktionskatalysator vorgesehen sind, die zusammen in einen Gehäuse mit einer ersten seitlichen Kammer nahe einer ersten Stirnseite und einer zweiten seitlichen Kammer nahe einer zweiten Stirnseite angeordnet sind. Das aus dem Dieselmotor stammende Abgas durchläuft einen Strömungspfad von zumindest einem Abgaseintritt hin zu zumindest einem Abgasaustritt durch die Komponenten: Oxidationskatalysator, Reduktionsmittelsprühvorrichtung und Reduktionskatalysator. Der Oxidationskatalysator ist hierbei ringförmig an der Umfangsfläche eines Rohres angeordnet, dessen Innenraum mit einem Russpartikelabscheider, einem Mischelement und/oder einem Hydrolysekatalysator zumindest bereichsweise gefüllt ist.

Aufgabe der Erfindung ist es, eine Vorrichtung zur Nachbehandlung von Abgasen in einer Abgasanlage von Brennkraftmaschinen, insbesondere von magerlauffähigen Brennkraftmaschinen von Kraftfahrzeugen, wie zum Beispiel Nutzfahrzeugen, vorzuschlagen, die auf einfache und funktionssichere Weise eine funktionell, insbesondere quantitativ verbesserte Zersetzung des Reduktionsmittels im Abgas ermöglicht und die einen nur geringen Bauraum erfordert.

Diese Aufgabe wird gelöst mit den Merkmalen des Patentanspruchs 1. Vorteilhafte und besonders zweckmäßige Weiterbildungen der Erfindung sind Gegenstand der Unteransprüche.

Gemäß Anspruch 1 ist eine Vorrichtung zur Nachbehandlung von Abgasen in einer Abgasanlage von Brennkraftmaschinen, insbesondere von magerlauffähigen Brennkraftmaschinen für Kraftfahrzeuge, mit wenigstens einem in den Abgasstrom geschalteten Reduktionsmittelzersetzungskatalysator, insbesondere einem Hydrolysekatalysator, vorgesehen. Ferner ist stromauf hierzu in einer Abgasleitung eine Dosiereinrichtung zur Zuführung von Reduktionsmittel angeordnet, insbesondere zur Zuführung einer wässrigen Harnstofflösung angeordnet. Weiter ist bevorzugt eine dem Reduktionsmittelzersetzungskatalysator nachgeschaltete Katalysatoreinrichtung vorgesehen, die insbesondere durch wenigstens einen SCR-Katalysator gebildet ist. Erfindungsgemäß ist dem Reduktionsmittelzersetzungskatalysator eine wenigstens einen Strömungsumlenkbereich aufweisende Einlaufstrecke für das Abgas vorgeschaltet, die so ausgebildet ist, dass das Abgas radial außerhalb eines an den Reduktionsmittelzersetzungskatalysator anschließenden Einlassrohrs in einem das Einlassrohr umgebenden Gehäuseabschnitt zugeführt und im Gegenstrom über eine stirnseitige Einlassöffnung des Einlassrohrs zum Reduktionsmittelzersetzungskatalysator geführt ist, wobei das Reduktionsmittel im, der Einlassöffnung zugeordneten Strömungsumlenkbereich des Abgasstromes zugeführt wird.

Mit dieser baulich relativ einfachen Maßnahme gelingt es, die Einlaufstrecke im Vergleich zu einem üblichen, gehäuseseitigen Einlassrohr bzw. Einlauftrichter wesentlich zu vergrößern, bei einem gleichzeitigen, guten gleichverteilten Anströmen sowie intensiver Aufheizung des inneren Einlassrohrs und des Reduktionsmittelzersetzungskatalysators, so dass diese sehr schnell Temperaturen erreichen können, bei denen eine wirkungsvolle und effiziente Zersetzung des Reduktionsmittels eintritt. Rückstände und Ablagerungen des Reduktionsmittels werden auf Grund der Beheizung des Einlauftrichters durch das außerhalb im Gegenstrom geführte Abgas weitestgehend vermieden. Mit der ein- oder mehrfachen Umlenkung lässt sich dabei die Einströmstrecke des Abgases vorteilhaft verlängern, wodurch sich, im Verhältnis zu einer kurzen, üblichen Einströmstrecke, eine gleichmäßigere Strömung ausbildet.

Zusätzlich dazu kann die Gleichverteilung der Strömung durch Drosselung bzw. Androsselung verbessert werden. Dazu kann im Bereich der Einlaufstrecke stromauf der Zuführung des Reduktionsmittels wenigstens eine Drosseleinrichtung zur Drosselung oder Androsselung des Abgasstroms vorgesehen sein und/oder kann der Strömungsquerschnitt stromauf der Zuführung des Reduktionsmittels kleiner ausgebildet sein als stromab der Zuführung des Reduktionsmittels.

Das erfindungsgemäße Abgasnachbehandlungssystem erlaubt es somit in vorteilhafter Weise, das Reduktionsmittel quantitativ zu zersetzen, ohne den Wirkungsgrad der Brennkraftmaschine zu verschlechtern.

Des Weiteren ist bevorzugt vorgesehen, dass das durchströmte Volumen in der Einlaufstrecke außerhalb des Einlassrohrs kleiner ist als das durchströmte Volumen innerhalb des Einlassrohrs. Dies stellt neben einer möglichst kompakten Bauform u.a. auch eine hohe Strömungsgeschwindigkeit des Abgases im Bereich einer z.B. Düse zur Reduktionsmittelzuführung mit einer wirkungsvollen Verwirbelung des Reduktionsmittels sicher und bewirkt dann eine Strömungsberuhigung bzw. Vergleichmäßigung mit homogener Verteilung des Reduktionsmittels innerhalb des Einlassrohres.

Des Weiteren ist es möglich, die Zuführung des Abgases in die Einlaufstrecke außerhalb des Einlaufrohres so zu gestalten, dass sich ein Drall in der Strömung ausbildet, wodurch die Strömung nochmals beeinflusst werden kann. Dies kann in bevorzugter Weise dadurch erreicht werden, dass die Zuführung in die Einlaufstrecke unter einem definierten Winkel geneigt, insbesondere nicht im rechten Winkel zur Wandung der Einlaufstrecke, und/oder bezogen auf die in der Querschnittsebene durch das Gehäuse gelegten Gehäusemittelachse(n) außermittig erfolgt.

Die Strömung kann zusätzlich durch Einbauten, die sich im vorderen Bereich des Einlassrohres, aber stromab der Zudosierstelle für das Reduktionsmittel befinden, beeinflusst werden. Dabei kann es sich z.B. um Bleche handeln, die in die Strömung ragen und dadurch die Turbulenz erhöhen. Dabei ist allerdings darauf zu achten, dass kein Reduktionsmittel auf diese Einbauten trifft, um Ablagerungen an diesen zu vermeiden. Alternativ dazu kann grundsätzlich auch vorgesehen sein, dass die Einlassöffnung durch eine Strömungsverwirbelungen erzeugende Umlaufkante begrenzt ist, die z.B. durch eine Zinnen aufweisende Umlaufkante ausgebildet sein kann. Die Anzahl und Geometrie der Zinnen ist hier dann ebenso wie deren Abstand auf den jeweiligen Einzelfall abgestimmt zu wählen.

Neben der Strömungsgleichverteilung ist eine möglichst homogene Verteilung des Reduktionsmittels im Abgastrakt notwendig. Alle oben genannten Maßnahmen können auch zur Verbesserung der Reduktionsmittelgleichverteilung im Abgasstrom verwendet werden, in dem durch geeignete Führung des Abgasstroms indirekt die Verteilung des Reduktionsmittels beeinflusst wird.

Allerdings besteht hier oft das Problem, dass mit steigendem Tropfen- oder Partikeldurchmesser des Reduktionsmittels, dieses der Abgasströmung nur bedingt folgt und stattdessen der Eigenimpuls der Tröpfchen bzw. Partikel Ihre Flugbahn bestimmt. Dies führt dazu, dass es lokal zu starken Überhöhungen der Reduktionsmittelkonzentration kommen kann. Dies ist um so problematischer, je niedriger die Abgastemperaturen liegen, da es auf Grund der endothermen Reaktion und, bei Lösung des Reduktionsmittels in Wasser, der auftretenden Verdampfungsenthalpie, zu einer lokal so starken Abkühlung des Abgases kommen kann, dass es an nachfolgenden Katalysatoren, insbesondere an den Reduktionsmittelzersetzungskatalysatoren zu Ablagerungen kommen kann.

Aus diesem Grund ist es vorteilhaft, auf eine Gleichverteilung der Strömung zu verzichten und stattdessen das Geschwindigkeitsprofil der Strömung so anzupassen, dass in Bereichen hoher Reduktionsmittelkonzentrationen bzw. - mengen hohe Strömungsgeschwindigkeiten vorliegen. Durch diese Maßnahme steht lokal mehr Abgasenthalpie zur Zersetzung des Reduktionsmittels und der Verdampfung des in der Reduktionsmittellösung enthaltenen Wassers zur Verfügung.

Das Einlassrohr kann grundsätzlich jede Querschnittsform aufweisen, also zum Beispiel zylindrisch oder eckig ausgebildet sein. Besonders bevorzugt ist das Einlassrohr jedoch durch einen trichter- oder konusförmig ausgebildeten Einlauftrichter gebildet, der sich zur Einlassöffnung hin verjüngt, so dass die Einlassöffnung gleichzeitig einen Drosselquerschnitt ausbildet.

Die Innenwände des Einlassrohrs können in vorteilhafter Weise katalytisch aktiv beschichtet sein. Die Beschichtung kann bevorzugt aus TiO₂, SiO₂ oder AlO₂ bestehen oder durch Zeolithe gebildet sein und trägt zu einer weiter verbesserten Zersetzung des Reduktionsmittels in NH₃ (Ammoniak) und zur Vermeidung von Ablagerungen an den betreffenden, abgasführenden Teilen bei.

Gemäß einer weiteren bevorzugten Ausgestaltung der vorliegenden Erfindung ist vorgesehen, dass stromab der Zuführung für das Reduktionsmittel ein Verdampfer und/oder Mischer angebracht ist. Gemäß einer hierzu konkreten Ausführungsform ist vorgesehen, dass im Einlassrohr ein Verdampfer und/oder Mischer angeordnet ist, der einen definierten Abstand von der Einlassöffnung aufweist, bevorzugt in etwa nach 2/3 der Rohrlänge des Einlassrohrs, von der Einlassöffnung aus gesehen, eingesetzt ist. Ein derartiger, optionaler Verdampfer und/oder Mischer ermöglicht eine noch intensivere Gleichverteilung des zudosierten Reduktionsmittels im Bereich des Einlassrohrs.

Gemäß einer weiteren besonders bevorzugten konkreten Ausgestaltung wird vorgeschlagen, dass eine Düse der Dosiereinrichtung zum Zuführen des Reduktionsmittels im der Einlassöffnung zugeordneten Strömungsumlenkbereich des Abgasstromes angeordnet und/oder auf die der Einlassöffnung gerichtet ist. Damit wird auf einfache Weise sichergestellt, dass das Reduktionsmittel zuverlässig und vollständig in das Einlassrohr und damit zum Reduktionsmittelzersetzungskatalysator gelangen kann.

Dabei ist es konstruktiv und strömungstechnisch vorteilhaft, wenn die Düse an einer Stirnwand des das Einlassrohr umgebenden Gehäuseabschnittes, der Einlauföffnung des Einlassrohrs in einem definierten Abstand gegenüberliegend angeordnet ist. Die Düse kann hinsichtlich ihrer Einspritzrichtung in die Einlassöffnung des Einlassrohrs koaxial zur Längsmittelachse des Einlassrohrs angeordnet sein, wodurch eine funktionssichere mittige Zudosierung in das Einlassrohr hinein ermöglicht wird. Alternativ dazu kann die Düse aber auch außermittig versetzt zur Längsmittelachse des Einlassrohrs angeordnet werden, wodurch eine einfache Abstimmung der lokalen Reduktionsmittelmenge auf die lokalen Strömungsgeschwindigkeiten gelingt, was zu einer guten Vermischung von Reduktionsmittel und Abgasstrom beiträgt

Gemäß einer vorteilhaften Weiterbildung der Erfindung können an dem Einlassrohr eine oder mehrere, insbesondere mehrere umfangsverteilte Bypassöffnungen ausgebildet sein, mittels denen die Einlaufstrecke bzw. der Strömungsumlenkbereich bevorzugt bygepasst werden kann und/oder mittels denen in gewünschtem Maße der Abgasgegendruck stromauf der Einlaufstrecke vermindert werden kann. Insbesondere für den Fall, dass die Strömungsgeschwindigkeit im Bereich der Reduktionsmittelzuführung, also z.B. im Düsenbereich, zu hoch werden sollte, besteht die Gefahr einer zu starken Ablenkung des Reduktionsmittelstrahls. Um dies zu vermeiden, kann über die wenigstens eine Bypassöffnung auch abgeblasen werden, um die Strömungsgeschwindigkeit im Reduktionsmittelzuführbereich, also z.B. im Düsenbereich, zu reduzieren. Die Bypassöffnungen bewirken eine bessere Gleichverteilung in unmittelbarer Nähe der Eintrittsfläche des Reduktionsmittelzersetzungskatalysators und eine direkte, temperaturerhöhende Anströmung desselben.

Zur Erzielung günstiger Strömungsverhältnisse kann ferner in dem das Einlassrohr umgebenden Gehäuseabschnitt stromauf des, der Einlassöffnung des Einlassrohrs zugeordneten Strömungsumlenkbereiches und damit stromauf der Reduktionsmittelzuführung sowie außerhalb des Einlassrohrs zumindest eine weitere Drosselstelle für das einströmende Abgas vorgesehen sein. Über diese Drosselstelle oder mehrere solcher Drosselstellen lässt sich die Strömungsgeschwindigkeit lokal und gezielt derart beeinflussen, dass im Umlenkbereich bzw. im Bereich der Düse der Dosiereinrichtung gezielte Strömungsverhältnisse und Turbulenzen in der thermischen Einlaufstrecke anliegen bzw. eingestellt werden können. Bevorzugt ist die Drosselstelle z.B. durch wenigstens eine, in einem das Einlassrohr umgebenden Ringraum ausgebildete Querschnittsverengung gebildet ist, welche Querschnittsverengung insbesondere durch eine einen Durchströmspalt freigebende Ringwand und/oder Lochblech gebildet ist. Insbesondere für den bereits zuvor angesprochenen Fall, dass die Strömungsgeschwindigkeit im Bereich der Reduktionsmittelzuführung, also z.B. im Düsenbereich, zu hoch werden sollte, wodurch die Gefahr einer zu starken Ablenkung des Reduktionsmittelstrahls besteht, kann alternativ oder zusätzlich zum Abblasen über die wenigstens eine Bypassöffnung vorgesehen werden, die Drosselstelle in einem definierten Abstand von der Einlassöffnung des Einlassrohrs anzuordnen. Bevorzugt ist hierbei die Drosselstelle z.B. in etwa auf halber Wegstrecke zwischen der wenigstens einen Bypassöffnung und der Einlassöffnung angeordnet.

In einer weiteren bevorzugten Ausgestaltung der Erfindung kann im Gehäuseabschnitt radial außerhalb des Einlassrohrs zumindest ein weiteres Gasführungsrohr angeordnet sein, das eine mäanderförmige Gasströmung mit mehrfacher Umlenkung des Abgasstromes zwischen der einmündenden Abgasleitung und dem Reduktionsmittelzersetzungskatalysator bzw. innerhalb der Einlaufstrecke bewirkt. Damit kann mit baulich geringem Mehraufwand eine weitere Verlängerung der Einlaufstrecke geschaffen werden, so dass gegebenenfalls auf den Einsatz von Drosseln verzichtet werden kann.

Dabei kann das Gasführungsrohr bevorzugt an einer Stirnwand des das Einlassrohr umgebenden Gehäuseabschnittes befestigt sein und z.B. einen im Wesentlichen ähnlichen Konuswinkel wie das Einlassrohr aufweisen. Alternativ dazu kann das zumindest eine weitere Gasführungsrohr aber auch durch mehrere ineinandergeschachtelte und/oder miteinander verbundene Rohre, insbesondere durch mehrere ineinandergeschachtelte und/oder miteinander verbundene Konusrohre, gebildet sein. Im Falle einer konischen Ausgestaltung des zumindest einen Gasführungsrohrs ist bevorzugt vorgesehen, dass der das Gasführungsrohr umschließende Gehäuseabschnitt bevorzugt ebenfalls konisch ausgeführt ist, wobei die mäanderförmige Gasströmung bestimmenden Querschnittsflächen entweder im Wesentlichen gleich oder, um z.B. wenigstens eine Drosselstelle auszubilden, wenigstens bereichsweise verengt ausgebildet sind.

Eine schnelle Aufheizung des Reduktionsmittelzersetzungskatalysators kann zudem dadurch erzielt werden, dass der Reduktionsmittelzersetzungskatalysator wenigstens in einem das Einlassrohr aufweisenden Gehäuseabschnitt und/oder im Bereich der Einlaufstrecke mit einer äußeren Wärmeisolierung versehen ist, so dass die Wärmeverluste an die Umgebung verringert werden.

Die soweit beschriebene Vorrichtung kann in eine Abgasleitung integriert sein, über die der gesamte Abgasstrom geleitet ist. Bevorzugt wird jedoch vorgeschlagen, in an sich bekannter Weise über eine Zweigleitung nur einen Teilstrom des Abgases der Brennkraftmaschine über den Reduktionsmittelzersetzungskatalysator zu leiten. Hierzu kann in der Zweigleitung und/oder in der Abgasleitung wenigstens eine den Teilstrom steuernde Drosseleinrichtung vorgesehen sein. Über den von der Drosseleinrichtung bewirkten Abgasgegendruck kann in relativ einfacher Weise die gewünschte Abgasmenge des Teilstromes bestimmt werden.

In baulich besonders einfacher Weise können als Drosseleinrichtung in der Abgasleitung ein Oxidationskatalysator und/oder ein Dieselpartikelfilter angeordnet sein, wobei die Zweigleitung stromauf des Oxidationskatalysators und/oder des Dieselpartikelfilters abzweigt. Damit wird ohne Mehraufwand der von diesen Einrichtungen bewirkte Abgasgegendruck dazu genutzt, um in Verbindung mit der konstruktiven Ausbildung der Zweigleitung, des Reduktionsmittelzersetzungskatalysators und der Einlaufstrecke die gewünschte Abgasmenge abzuzweigen.

Grundsätzlich kann der Teilstrom zum Beispiel auch stromauf und/oder stromab einer Turbine eines in die Abgasleitung eingeschalteten Abgasturboladers der Brennkraftmaschine abgezweigt werden.

Besonders bevorzugt ist jedoch eine Ausgestaltung, bei der, alternativ oder zusätzlich zur zuvor diskutierten Ausgestaltung der Drosseleinrichtung die Drosseleinrichtung die Turbine eines in die Abgasleitung eingeschalteten Abgasturboladers der Brennkraftmaschine sein kann, wobei die Zweigleitung dann stromauf der Abgasturbine abzweigt.

Des Weiteren kann in der Zweigleitung stromauf des Reduktionsmittelzersetzungskatalysators ein Drosselventil zur variablen Steuerung des Durchsatzes des Teilstromes des Abgases in Abhängigkeit von definierten Brennkraftmaschinen- und/oder Betriebsparametern, insbesondere zumindest in Abhängigkeit von Last- und/oder Drehzahlsignalen der Brennkraftmaschine, angeordnet sein, mittels dem zum Beispiel in besonderem Maße dem instationären Betrieb von Brennkraftmaschinen in Kraftfahrzeugen Rechnung getragen werden kann. Mit diesen und gegebenenfalls weiteren Betriebsparametern kann sowohl die Abgasmenge als auch die Menge an eindosiertem Reduktionsmittel gezielt gesteuert werden. Das Drosselventil kann alternativ auch in der Abgasleitung angeordnet sein.

Schließlich kann bei einer Brennkraftmaschine mit mehreren, insbesondere zwei Zylindergruppen oder -bänken und mehreren, insbesondere zwei teilweise getrennten Abgasanlagen nur ein Teilstrom einer Abgasanlage über den Reduktionsmittelzersetzungskatalysator geführt sein und/oder die dieser Abgasanlage zugeordnete Zylindergruppe oder Zylinderbank mit definiert anderen Betriebsparametern und/oder Motorparametern betrieben werden als wenigstens ein Teil der restlichen Zylindergruppen oder -bänke, insbesondere in einem Modus mit erhöhter Abgastemperatur gesteuert werden. Der Abgasteilstrom wird dann den Abgasanlagen bevorzugt stromauf des zumindest einen SCR-Katalysators wieder zugeführt. Die Zylindergruppen oder gegebenenfalls Zylinderbänke können über ein Motorsteuergerät so betrieben werden, dass zum Beispiel in der Startphase und/oder in einem Niedriglastbereich bei der Zylindergruppe mit zugeschaltetem Hydrolysekatalysator und Dosiereinrichtung für das Reduktionsmittel die Abgastemperatur erhöht ist, um eine schnell einsetzende und wirkungsvolle Zersetzung sicherzustellen, während die andere Zylindergruppe Wirkungsgrad optimiert betrieben wird.

Weiter kann dem wenigstens einen SCR-Katalysator ein NH₃-Sperrkatalysator nachgeschaltet sein, um einen Ammoniakschlupf zu vermeiden.

Mehrere Ausführungsbeispiele der Erfindung sind im Folgenden mit weiteren Einzelheiten näher erläutert. Die schematische Zeichnung zeigt in:
- Fig. 1: stark abstrahiert eine Abgasanlage für Brennkraftmaschinen in Kraftfahrzeugen, mit einem in eine Zweigleitung eingeschalteten Hydrolysekatalysator als Reduktionsmittelzersetzungskatalysator, einer Dosiereinrichtung für ein Reduktionsmittel und einem stromab dazu angeordneten SCR-Katalysator,
- Fig. 2: den Hydrolysekatalysator gemäß Fig. 1 mit vorgeschalteter Einlaufstrecke und einer Düse der Dosiereinrichtung in vergrößerter Darstellung,
- Fig. 3: eine alternative Ausgestaltung des Hydrolysekatalysators gemäß Fig. 2 mit einem weiteren Gasführungsrohr,
- Fig. 4: eine alternative Ausgestaltung des Hydrolysekatalysators mit einem im Bereich einer Einlassöffnung eines Einlasstrichters angeordneten Umlenkblech,
- Fig. 5: schematisch eine Vorderansicht der Einlassöffnung des Einlauftrichters mit dort angeordnetem Umlenkblech sowie mit nicht rechtwinkliger, außermittiger Abgasstromzuführung im Bereich der Einlaufstrecke;
- Fig. 6: eine alternative Ausgestaltung des Hydrolysekatalysators mit außermittig versetzter Düse.

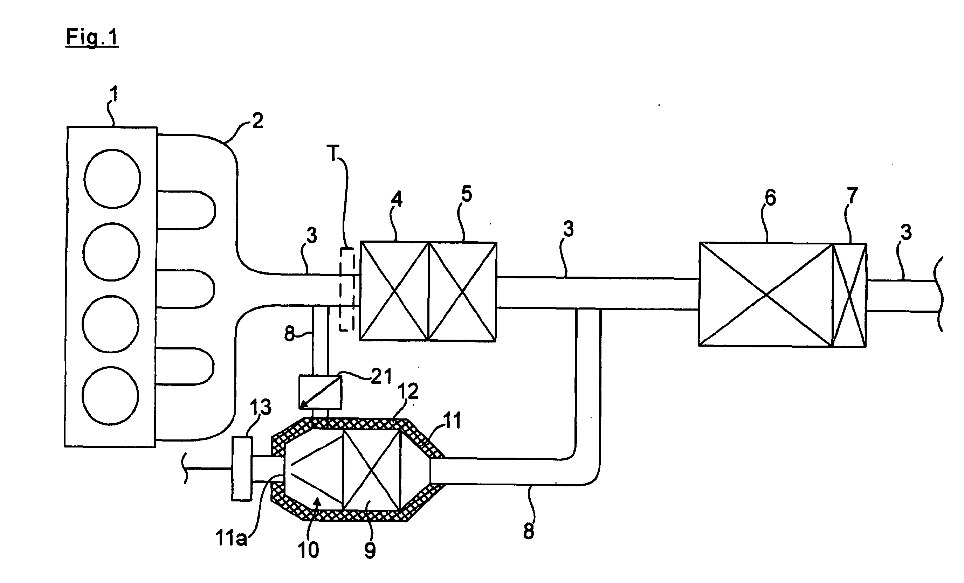

In der Fig. 1 ist mit dem Bezugszeichen 1 eine nur angedeutete Brennkraftmaschine bezeichnet, deren Abgase aus den hier vier Brennräumen über einen Abgaskrümmer 2 einer Abgasleitung 3 zugeleitet werden.

In der Abgasleitung 3 sind in Strömungsrichtung des Abgases ein Oxidationskatalysator 4, ein Partikelfilter 5 und schließlich ein SCR-Katalysator 6 mit einem NH₃-Sperrkatalysator 7 angeordnet. Soweit nicht beschrieben sind diese Abgasnachbehandlungsvorrichtungen 4, 5, 6, 7 geläufiger Konstruktion und Bauart.

Stromauf des Oxidationskatalysators 4 ist an die Abgasleitung 3 eine Zweigleitung 8 angeschlossen, die stromab des Partikelfilters 5 und stromauf des SCR-Katalysators 6 wieder in die Abgasleitung 3 zurückgeführt ist.

In der Zweigleitung 8 ist ein Hydrolysekatalysator 9 mit einer vorgeschalteten, Einlaufstrecke 10 vorgesehen, die in einem gemeinsamen, etwa zylindrischen Gehäuse 11 angeordnet sind. Das Gehäuse 11 ist mittels einer Wärmedämmschicht 12 nach außen thermisch isoliert.

An der Stirnseite 11a des Gehäuses 11 ragt eine Düse 13 ein, mittels der über eine nicht dargestellte Dosiereinrichtung als Reduktionsmittel zum Beispiel eine wässrige Harnstofflösung eindosiert wird.

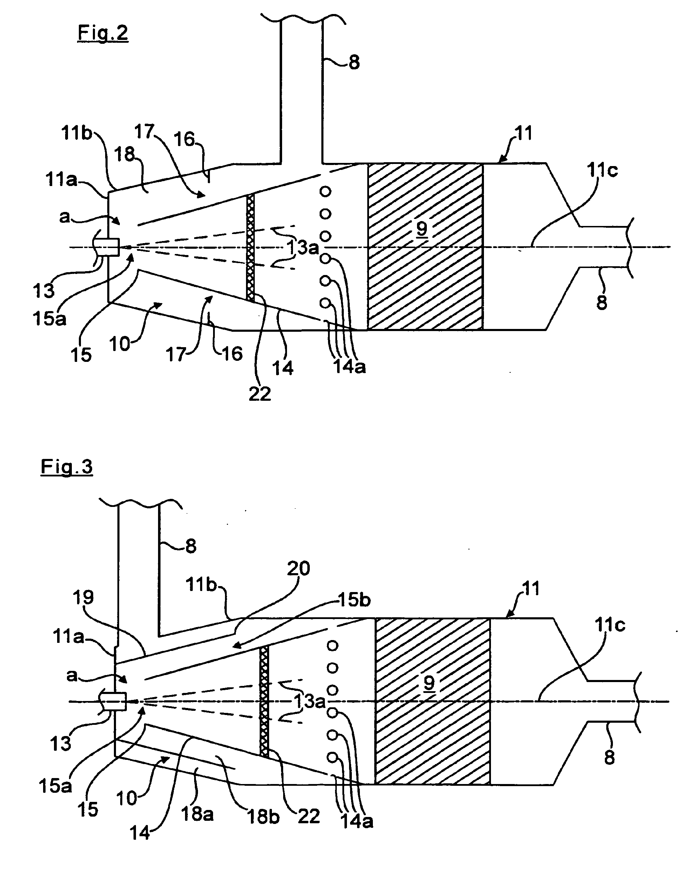

Die Fig. 2 zeigt den Hydrolysekatalysator 9 mit vorgeschalteter Einlaufstrecke 10, die in dem gemeinsamen Gehäuse 11 (ohne Wärmedämmschicht 12 gezeichnet) angeordnet sind.

Dabei mündet die Zweigleitung 8 in Nähe des Hydrolysekatalysators 9 radial in einen stromauf liegenden, an die Stirnwand 11a anschließenden, konischen Gehäuseabschnitt 11 b außerhalb eines konischen Einlauftrichters 14. Der Einlauftrichter 14 verjüngt sich von einem zum Hydrolysekatalysator 9 gleichen Strömungsquerschnitt ausgehend in Richtung zur Stirnwand 11a des Gehäuses 11 und endet dort als Drosselstelle mit wesentlich kleinerem Öffnungsquerschnitt in einer Einlassöffnung 15, die einen definierten Spaltabstand a zur Stirnwand 11a bzw. zu der dort einragenden Düse 13 der Dosiereinrichtung aufweist.

Der Strömungsquerschnitt in der Einlaufstrecke 10 außerhalb des Einlauftrichters 14 ist hier kleiner ausgebildet als der Strömungsquerschnitt innerhalb des Einlauftrichters 14, was neben einer möglichst kompakten Bauform u.a. auch eine hohe Strömungsgeschwindigkeit des Abgases im Bereich der Düse 13 sowie weiter, innerhalb des Einlauftrichters 14 eine Strömungsberuhigung bzw. Vergleichmäßigung mit homogener Verteilung des Reduktionsmittels bewirkt.

Die Düse 13 ist wie ersichtlich an der Stirnwand 11a, dem Einlauftrichter 14 gegenüberliegend sowie hier beispielhaft auf dessen Längsmittelachse 11c positioniert, so dass sich der Düsenstrahl 13a gleichmäßig innerhalb des Einlauftrichters 14 verteilen kann.

Lediglich beispielhaft ist hier zudem im Einlauftrichter 14 noch ein Verdampfer und/oder Mischer 22 angeordnet, der einen definierten Abstand von der Einlassöffnung 15 aufweist, bevorzugt in etwa nach 2/3 der Rohrlänge des Einlassrohrs 14, von der Einlassöffnung 15 aus gesehen, eingesetzt ist.

Außerhalb des Einlauftrichters 14 und etwa mittig zu dessen Länge (um einen möglichst großen Abstand zur Einlassöffnung 15 aufzuweisen) ist an dem konisch ausgeführten Gehäuseabschnitt 11b eine durch eine Ringwand und/oder Lochblech 16 gebildete Drosselstelle 17 vorgesehen, die den Strömungsquerschnitt in diesem Bereich entsprechend vermindert.

Ferner sind hier optional und umfangsverteilt um den Einlauftrichter 14 sowie in Nähe der Einströmfläche des Hydrolysekatalysators 9 Bypassöffnungen 14a in den Einlauftrichter 14 eingearbeitet, die zum Beispiel kreis- oder schlitzförmig ausgebildet sein können.

Der über die Zweigleitung 8 abgeleitete Abgasteilstrom strömt radial in den außerhalb des Einlauftrichters 14 und zwischen dem Gehäuseabschnitt 11a gebildeten Ringraum 18 ein, dessen durchströmtes Volumen kleiner als das durchströmte Volumen innerhalb des Einlauftrichters 14 ausgeführt sein kann. Durch die durch eine Ringwand und/oder ein Lochblech 16 gebildete Drosselstelle 17 wird die Gleichverteilung der Strömung noch verbessert.

Der damit verbundene Druckanstieg stromauf der Drosselstelle 17 bewirkt ferner, dass ein definierter Anteil der Abgasteilmenge über die Bypassöffnungen 14a direkt auf den Hydrolysekatalysator 9 geleitet wird, wodurch die Vergleichmäßigung des Abgasstroms noch weiter verbessert wird.

Das einströmende, heiße Abgas heizt von außen bereits den Einlauftrichter 14 auf, bevor es als weiteren Abschnitt der thermischen Einlaufstrecke 10 an der eine Drosselstelle ausbildenden Einlassöffnung 15 in einem Strömungsumlenkbereich 15a um ca. 180° umgelenkt und nunmehr innerhalb des Einlauftrichters 14 im Gegenstrom mit zunehmendem Strömungsquerschnitt und damit bedingter abnehmender Strömungsgeschwindigkeit dem Hydrolysekatalysator 9 zugeführt wird. Im Strömungsumlenkbereich 15a wird dazu über die Düse 13 und die Dosiereinrichtung die wässrige Harnstofflösung zugedüst.

Im Einlauftrichter 14 und im Hydrolysekatalysator 9 wird der zudosierte Harnstoff mittels Thermolyse und Hydrolyse zu NH₃ (Ammoniak) zersetzt und über die abgehende Zweigleitung 8 wieder der Abgasleitung 3 stromauf des SCR-Katalysators 6 zugeführt, in dem mittels des Reduktionsmittels NH₃ die im gesamten Abgas enthaltenen Stickoxide zu Stickstoff und Wasserdampf reduziert werden. Der NH₃-Sperrkatalysator 7 schließlich verhindert eine gegebenenfalls auftretende Emission von NH₃ in die Atmosphäre.

Der Einlauftrichter 14 ist zum Beispiel an seinen Innenwänden analog zum Hydrolysekatalysator 9 mit zum Beispiel TiO₂ katalytisch wirksam beschichtet, um gegebenenfalls auftretenden Rückständen und Ablagerungen von Harnstoff, insbesondere bei noch nicht ausreichend hohen Abgastemperaturen, entgegenzuwirken.

Die Fig. 3 zeigt eine alternative Ausführung der vorgeschalteten Einlaufstrecke 10 des Hydrolysekatalysators 9 innerhalb des Gehäuses 11 und ist nur soweit beschrieben, als sie sich von der Ausführung gemäß Fig. 2 unterscheidet. Funktionell gleiche Teile sind mit gleichen Bezugszeichen versehen.

Abweichend zur Fig. 2 mündet die das Abgas zuführende Zweigleitung 8 hier mehr im Bereich der Stirnwand 11a des Gehäuses 11 in den Gehäuseabschnitt 11 b ein.

An der Stirnwand 11a ist ferner ein konisches Gasführungsrohr 19 befestigt, das in etwa parallel bzw. mit in etwa ähnlichem Konuswinkel sowie im Wesentlichen symmetrisch zum Einlauftrichter 14 etwa über dessen halbe Länge verläuft und somit den Ringraum 18 außerhalb des Einlauftrichters 14 in zwei Strömungswege 18a und 18b unterteilt.

Das über die Zweigleitung 8 zugeführte Abgas strömt somit unter zweifacher Umlenkung in den Strömungsumlenkbereichen 15a und 15b, nämlich einmal an der freien Stirnseite 20 des Gasführungsrohres 19 und das zweitemal an der Einlassöffnung 15 des Einlauftrichters 14, in den Einlauftrichter 14 und dann in den Hydrolysekatalysator 9. Es ist offensichtlich, dass durch den Einsatz des Gasführungsrohres 19 die Einlaufstrecke 10 bei geringstem Bauraum nochmals vergrößert ist.

Ein Anteil der Abgasmenge kann auch hier wiederum über die optionalen Bypassöffnungen 14a direkt über den Strömungsweg 18a zum Hydrolysekatalysator 9 strömen.

Wie bereits zuvor ausgeführt, kann der Einlauftrichter 14 gemäß den Fig. 2 und 3 gegebenenfalls auch ohne Bypassöffnungen 14a aufgeführt sein, so dass eine direkte Anströmung des Hydrolysekatalysators 9 unterbunden ist und die gesamte Abgasteilströmung über die Einlaufstrecke 10 geleitet ist.

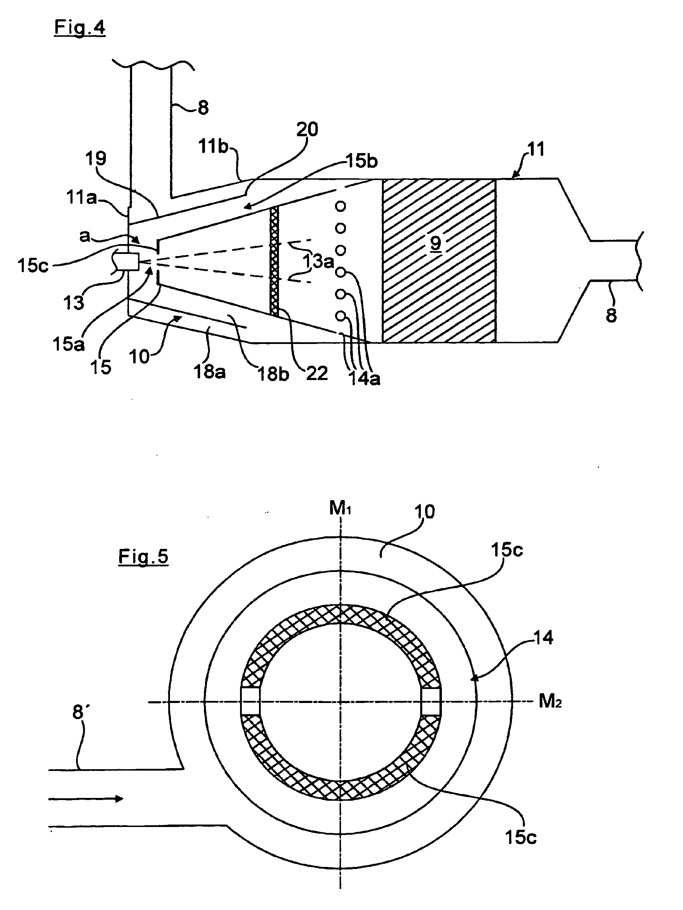

Die Fig. 4 zeigt eine weitere alternative Ausführung und ist nur soweit beschrieben, als sie sich von der Ausführung gemäß Fig. 2 und 3 unterscheidet. Funktionell gleiche Teile sind mit gleichen Bezugszeichen versehen. Insbesondere zeigt die Fig. 4 hier beispielhaft die Verwendung von Umlenkblechen 15c im Bereich der Einlassöffnung 15 des Einlauftrichters 14, die zur Erhöhung der Turbulenz, stromab der Zuführung für das Reduktionsmittel dienen. Im Gegensatz zum Verdampfer bzw. Mischer 22 sind die Umlenkbleche 15c so positioniert, dass das Reduktionsmittel nicht auf diese trifft, um Ablagerungen an diesen Bauteilen zu vermeiden.

Die Umlenkbleche können beliebige Geometrien aufweisen. Besonders bevorzugt ist eine zacken-, fächer- oder ringförmige Geometrie. In der Fig. 5 ist eine Draufsicht auf den Einlauftrichter 14 mit hier lediglich beispielhaft zwei halbkreisförmigen Umlenkblechen 15c gezeigt, die hier kreuzschraffiert dargestellt sind. Zusätzlich ist eine Zuführung 8' des Abgases dargestellt, die außermittig gegenüber den Mittelachsen M₁, M₂ versetzt und/oder geneigt, das heißt zum Beispiel nicht im rechten Winkel, zum Umfang des Gehäuses der Einlaufstrecke 10 erfolgt. Hierdurch wird der Abgasströmung ein Drall aufgeprägt, über den die Verteilung des Abgases und des Reduktionsmittels beeinflusst werden kann.

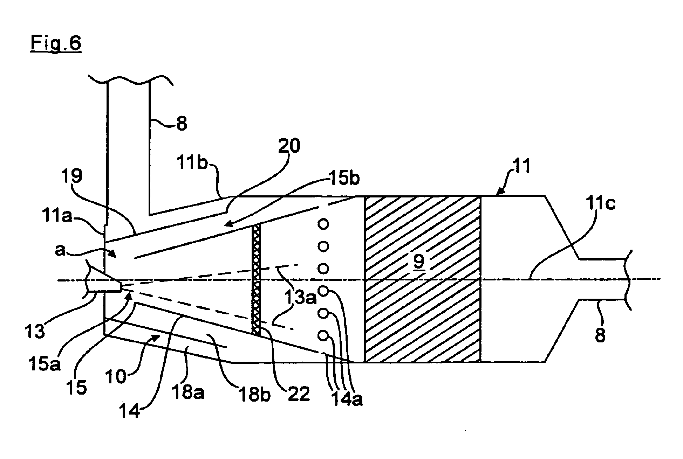

In der Fig. 6 ist schließlich eine Ausführungsform gezeigt, bei der die Düse 13 außermittig versetzt zur Längsmittelachse 11c des Einlassrohrs 14 einspritzt, wodurch eine Anpassung der lokalen Reduktionsmittelmenge an die Strömungsgeschwindigkeiten erfolgt , was zu einer guten Vermischung von Reduktionsmittel und Abgasstrom beiträgt. Selbstverständlich kann ein derartiger Aufbau mit außermittig versetzter Düse 13 grundsätzlich auch bei der Ausgestaltung nach Fig. 2, 3 und 4 vorgesehen werden. Ebenso ist es selbstverständlich möglich, die Düsenpositionierung der Ausgestaltung nach z.B. Fig. 2 auf die Ausgestaltung der Fig. 6 zu übertragen.

Gemäß Fig. 1 ist in der Zweigleitung 8 ferner stromauf des Hydrolysekatalysators 9 ein steuerbares Drosselventil 21 eingesetzt, das nach Maßgabe von Betriebsparametern der Brennkraftmaschine 1, wie zum Beispiel Lastanforderung, Drehzahl, Temperatur, etc., die abgezweigte Abgasteilmenge steuert, so dass deren Durchsatz mehr oder minder an die jeweils anstehenden Gesamtabgasmenge anpassbar ist.

Es kann gegebenenfalls aber auch ausreichend sein, wenn der funktionsbedingt einen Abgasgegendruck erzeugende Oxidationskatalysator 4 und der Dieselpartikelfilter 5 als Drosseleinrichtungen genutzt werden, indem die Zweigleitung 8 entsprechend stromauf abzweigt und stromab wieder in die Abgasleitung 3 einmündet.

Als weitere Drosseleinrichtung bei einer aufgeladenen Brennkraftmaschine mit in dem Abgasstrang befindlicher Abgasturbine T des Abgasturboladers (lediglich äußerst schematisch und strichliert in Fig. 1 dargestellt) kann die Zweigleitung 8 auch stromauf der Abgasturbine an die Abgasleitung 3 angeschlossen sein.

Weist die Brennkraftmaschine 1 zum Beispiel eine geteilte Abgasführung mit zugeordneten Zylindergruppen oder bei einer V-Brennkraftmaschine mit zugeordneten Zylinderbänken auf, so dass zum Beispiel zwei Abgaskrümmer 2 und Abgasleitungen 3 mit entsprechenden Abgasturboladern und/oder Katalysatoren 4, 5, 6, 7 vorhanden sind, so kann die Zweigleitung 8 mit dem Hydrolysekatalysator 9 und der Einlaufstrecke 10 bevorzugt von einer der Abgasleitungen 3 abgehen. Dies hat den Vorteil, dass diese Zylindergruppe oder Zylinderbank über ein Motorsteuergerät so betrieben werden kann, dass in diesem Abgasstrang abhängig von Betriebsparametern wie Kaltstart, Leerlauf oder Niedriglast die Abgastemperatur angehoben wird, um eine früh einsetzende, wirkungsvolle Zersetzung des zudosierten Reduktionsmittels bzw. der Harnstofflösung zu erreichen. Die andere Zylindergruppe oder Zylinderbank kann wirkungsgradoptimiert und/oder bei niedriger Last betrieben werden.

Die abgezweigte Abgasteilmenge wird nach deren Behandlung im Hydrolysekatalysator 9 beiden aufgeteilten Abgassträngen bzw. beiden Abgasleitungen 3 stromauf der SCR-Katalysatoren 6 zugeführt.

Die aufgeteilte Abgasanlage kann aber auch so ausgeführt sein, dass sie vor einem einzigen SCR-Katalysator 6 wieder zu einer Abgasleitung 3 zusammengeführt ist.

Es sei bemerkt, dass die Anordnung des Hydrolysekatalysators 9 mit der Einlaufstrecke 10 nicht wie dargestellt in einem separaten Gehäuse 11 ausgeführt sein muss. Die Bauteile 9 und 10 können gegebenenfalls auch mit dem Oxidationskatalysator 4 und/oder dem Dieselpartikelfilter 5 in einem Gehäuse zusammengebaut sein.

Für den Oxidationskatalysator 4 zur Oxidation von Stickstoffmonoxid wird bevorzugt Platin und/oder Palladium und/oder Rhodium und/oder Cer und/oder deren Oxide und/oder Zeolithe als aktive katalytische Materialien eingesetzt. Als Aktivkomponenten für die SCR-Katalysatoren zur Reduktion von Stickoxiden mit Hilfe von Ammoniak kommen in vorteilhafter Weise Vanadium und/oder Vanadiumpentoxid und/oder Titandioxid und/oder Wolframoxid und/oder kupferhaltige Zeolithe und/oder eisenhaltige Zeolithe und/oder cobalthaltige Zeolithe zum Einsatz.

## Patentansprüche

1. Vorrichtung zur Nachbehandlung von Abgasen in einer Abgasanlage von Brennkraftmaschinen (1), insbesondere von magerlauffähigen Brennkraftmaschinen (1) für Kraftfahrzeuge, mit wenigstens einem in den Abgasstrom geschalteten Reduktionsmittelzersetzungskatalysator (9), insbesondere einem Hydrolysekatalysator, und einer stromauf hierzu in einer Abgasleitung angeordneten Dosiereinrichtung zur Zuführung von Reduktionsmittel, insbesondere zur Zuführung einer wässrigen Harnstofflösung, wobei dem Reduktionsmittelzersetzungskatalysator (9) bevorzugt wenigstens eine weitere Katalysatoreinrichtung, insbesondere wenigstens ein SCR-Katalysator (6), nachgeschaltet ist, wobei dem Reduktionsmittelzersetzungskatalysator (9) eine wenigstens einen Strömungsumlenkbereich (15a, 15b) aufweisende Einlaufstrecke (10) für das Abgas vorgeschaltet ist, die so ausgebildet ist, dass das Abgas radial außerhalb eines an den Reduktionsmittelzersetzungskatalysator (9) anschließenden Einlassrohrs (14) in einem das Einlassrohr (14) umgebenden Gehäuseabschnitt (11a, 11b) zugeführt und im Gegenstrom über eine stirnseitige Einlassöffnung (15) des Einlassrohrs (14) zum Reduktionsmittelzersetzungskatalysator (9) geführt ist, wobei das Reduktionsmittel im der Einlassöffnung (15) zugeordneten Strömungsumlenkbereich (15a) des Abgasstromes zugeführt wird, **dadurch gekennzeichnet, dass**
an dem Einlassrohr (14) wenigstens eine Bypassöffnung (14a) ausgebildet ist.

2. Vorrichtung nach Anspruch 1, **dadurch gekennzeichnet, dass** im Bereich der Einlaufstrecke (10) stromauf der Zuführung des Reduktionsmittels wenigstens eine Drosseleinrichtung (17) zur Drosselung oder Androsselung des Abgasstroms vorgesehen ist.

3. Vorrichtung nach Anspruch 1 oder 2, **dadurch gekennzeichnet, dass** im Bereich der Einlaufstrecke (10) stromauf der Zuführung des Reduktionsmittels der Strömungsquerschnitt kleiner ist als stromab der Zuführung des Reduktionsmittels und/oder dass das durchströmte Volumen in der Einlaufstrecke (10) außerhalb des Einlassrohrs (14) kleiner ist als das durchströmte Volumen innerhalb eines definierten Einlassbereiches des Einlassrohrs (14).

4. Vorrichtung nach einem der Ansprüche 1 bis 3, **dadurch gekennzeichnet, dass** eine Düse (13) der Dosiereinrichtung zum Zuführen des Reduktionsmittels im der Einlassöffnung (15) zugeordneten Strömungsumlenkbereich (15a) angeordnet und/oder auf die Einlassöffnung (15) gerichtet ist, wobei bevorzugt vorgesehen ist, dass die Düse (13) an einer Stirnwand (11a) des das Einlassrohr (14) umgebenden Gehäuseabschnittes (11 b), der Einlassöffnung (15) des Einlassrohrs(14) in einem definierten Abstand (a) gegenüberliegend angeordnet ist und/oder dass die Düse (13) hinsichtlich ihrer Einspritzrichtung in die Einlassöffnung (15) des Einlassrohrs (14) koaxial oder außermittig versetzt zur Längsmittelachse (11c) des Einlassrohrs (14) angeordnet ist.

5. Vorrichtung nach einem der Ansprüche 1 bis 4, **dadurch gekennzeichnet, dass** stromab der Zuführung für das Reduktionsmittel wenigstens ein Mittel (15c), bevorzugt wenigstens ein Umlenkblech, zur Umlenkung der Strömung und/oder Erhöhung der Turbulenz vorgesehen oder angebracht ist.

6. Vorrichtung nach einem der Ansprüche 1 bis 5, **dadurch gekennzeichnet, dass** wobei bevorzugt vorgesehen ist, dass das wenigstens eine Mittel (15c) zur Umlenkung der Strömung und/oder Erhöhung der Turbulenz wenigstens bereichsweise um oder entlang der Einlassöffnung (15) ausgebildet oder angeordnet ist und/oder dass das wenigstens eine Mittel (15c) zur Umlenkung der Strömung und/oder Erhöhung der Turbulenz so ausgebildet oder angeordnet ist, dass das insbesondere mittels einer Düse (13) zudosierte Reduktionsmittel nicht auf dieses auftrifft.

7. Vorrichtung nach einem der Ansprüche 1 bis 6, **dadurch gekennzeichnet, dass** in denjenigen Bereichen, in denen eine definiert hohe Reduktionsmittelkonzentration oder Reduktionsmittelmenge vorliegt, die Strömungsgeschwindigkeit durch Einbauten und/oder querschnittsverändernde Maßnahmen gegenüber denjenigen Bereichen, in denen eine demgegenüber niedrigere Reduktionsmittelkonzentration oder Reduktionsmittelmenge vorliegt, erhöht ist.

8. Vorrichtung nach einem der Ansprüche 1 bis 7, **dadurch gekennzeichnet, dass** stromab der Zuführung für das Reduktionsmittel ein Verdampfer und/oder Mischer (22) angebracht ist, bevorzugt im Einlassrohr (14) ein Verdampfer und/oder Mischer (22) angeordnet ist, der einen definierten Abstand von der Einlassöffnung (15) aufweist, bevorzugt in etwa nach 2/3 der Rohrlänge des Einlassrohrs (14), von der Einlassöffnung (15) aus gesehen, eingesetzt ist.

9. Vorrichtung nach einem der Ansprüche 1 bis 8, **dadurch gekennzeichnet, dass** an dem Einlassrohr (14) mehrere, insbesondere umfangsverteilte Bypassöffnungen (14a) ausgebildet sind.

10. Vorrichtung nach einem der Ansprüche 1 bis 9, **dadurch gekennzeichnet, dass** in dem das Einlassrohr (14) radial umgebenden Gehäuseabschnitt (11b) stromauf des der Einlassöffnung (15) zugeordneten Strömungsumlenkbereichs (15a) und damit stromauf der Reduktionsmittelzuführung (13) sowie außerhalb des Einlassrohrs (14) zumindest eine weitere Drosselstelle (17) für das einströmende Abgas vorgesehen ist.

11. Vorrichtung nach Anspruch 9 oder 10, **dadurch gekennzeichnet, dass** die Drosselstelle (17) einen definierten Abstand von der Einlassöffnung (15) des Einlassrohrs (14) und/oder der wenigstens einen Bypassöffnung (14a) aufweist, insbesondere in etwa auf halber Wegstrecke zwischen der wenigstens einen Bypassöffnung (14a) und der Einlassöffnung (15) angeordnet ist.

12. Vorrichtung nach Anspruch 9, 10 oder 11, **dadurch gekennzeichnet, dass** die Drosselstelle (17) durch wenigstens eine, in einem das Einlassrohr (14) umgebenden Ringraum (18) ausgebildete Querschnittsverengung gebildet ist, welche Querschnittsverengung insbesondere durch eine einen Durchströmspalt freigebende Ringwand und/oder ein Lochblech (16) gebildet ist.

13. Vorrichtung nach einem der Ansprüche 1 bis 12, **dadurch gekennzeichnet, dass** im Gehäuseabschnitt (11 b) radial außerhalb des Einlassrohrs (14) zumindest ein weiteres Gasführungsrohr (19) angeordnet ist, das eine mäanderförmige Gasströmung mit mehrfacher Umlenkung des Abgasstromes zwischen der radial einmündenden Abgasleitung (8) und dem Reduktionsmittelzersetzungskatalysator (9) bzw. innerhalb der Einlaufstrecke (10) bewirkt.

14. Vorrichtung nach einem der Ansprüche 1 bis 13, **dadurch gekennzeichnet, dass** das zumindest eine weitere Gasführungsrohr (19) an einer Stirnwand (11a) des das Einlassrohr (14) umgebenden Gehäuseabschnittes (11b) befestigt ist und/oder im Wesentlichen parallel zum Einlassrohr (14) verläuft, insbesondere einen im Wesentlichen gleichen Konuswinkel wie das Einlassrohr (14) aufweist und/oder dass das zumindest eine weitere Gasführungsrohr (19) durch mehrere ineinandergeschachtelte und/oder miteinander verbundene Rohre, insbesondere durch mehrere ineinandergeschachtelte und/oder miteinander verbundene Konusrohre, gebildet ist.

15. Vorrichtung nach einem der Ansprüche 1 bis 14, **dadurch gekennzeichnet, dass** die Zuführung (8') des Abgases in das, die Einlaufstrecke (10) umgebende Gehäuse unter einem Winkel geneigt zum Gehäuse erfolgt, insbesondere nicht im rechten Winkel zum Gehäuse erfolgt, und/oder außermittig versetzt zu Gehäusemittelachsen erfolgt.

## Claims

1. A device for the aftertreatment of exhaust gases in an exhaust system of internal combustion engines (1), in particular of internal combustion engines (1) that can be operated with lean mixture for motor vehicles, having at least one reducing agent decomposition catalyst (9) positioned in the exhaust-gas flow, in particular a hydrolysis catalyst, and having a dosing device for the supply of reducing agent, in particular for the supply of an aqueous urea solution, arranged upstream of said reducing agent decomposition catalyst in an exhaust line, wherein a further catalyst device, in particular at least one SCR catalyst (6), is positioned downstream of the reducing agent decomposition catalyst (9), wherein an inflow path (10) for the exhaust gas, which inflow path has at least one flow diversion region (15a, 15b), is positioned upstream of the reducing agent decomposition catalyst (9), said inflow path being designed such that the exhaust gas is supplied, radially outside an inlet pipe (14) which connects to the reducing agent decomposition catalyst (9), in a housing section (11a, 11b) surrounding the inlet pipe (14) and is conducted to the reducing agent decomposition catalyst (9) in a countercurrent direction via a face-side inlet opening (15) of the inlet pipe (14), wherein the reducing agent is supplied in that flow diversion region (15a) of the exhaust-gas flow which is assigned to the inlet opening (15), **characterized in that** at least one bypass opening (14a) is formed on the inlet pipe (14).

2. The device according to Claim 1, **characterized in that** at least one throttle device (17) for throttling or restricting the exhaust-gas flow is provided in the region of the inflow path (10) upstream of the supply of the reducing agent.

3. The device according to Claim 1 or 2, **characterized in that**, in the region of the inflow path (10), the flow cross section upstream of the supply of the reducing agent is smaller than that downstream of the supply of the reducing agent, and/or **in that** the volume through which flow passes in the inflow path (10) outside the inlet pipe (14) is smaller than the volume through which flow passes within a defined inlet region of the inlet pipe (14).

4. The device according to one of Claims 1 to 3, **characterized in that** a nozzle (13) of the dosing device for the supply of the reducing agent is arranged **in that** flow diversion region (15a) which is assigned to the inlet opening (15), and/or said nozzle is directed toward the inlet opening (15), wherein it is preferably provided that the nozzle (13) is arranged on a face wall (11a) of the housing section (11b) surrounding the inlet pipe (14), is arranged opposite the inlet opening (15) of the inlet pipe (14) with a defined spacing (a), and/or that the nozzle (13) is, with regard to its injection direction into the inlet opening (15) of the inlet pipe (14), arranged coaxially or eccentrically offset with respect to the longitudinal central axis (11c) of the inlet pipe (14).

5. The device according to one of Claims 1 to 4, **characterized in that** at least one means (15c), preferably at least one diverting plate, for diverting the flow and/or increasing the turbulence is provided or fitted downstream of the supply for the reducing agent.

6. The device according to one of Claims 1 to 5, **characterized in that** it is preferably provided that the at least one means (15c) for diverting the flow and/or increasing the turbulence is formed or arranged at least regionally around or along the inlet opening (15), and/or **in that** the at least one means (15c) for diverting the flow and/or increasing the turbulence is designed or arranged such that the reducing agent that is dosed in in particular by means of a nozzle (13) does not impinge on said means.

7. The device according to one of Claims 1 to 6, **characterized in that**, in those regions in which a definedly high reducing agent concentration or reducing agent quantity is present, the flow speed is, by way of fixtures and/or measures for changing the cross section, increased in relation to those regions in which a relatively lower reducing agent concentration or reducing agent quantity is present.

8. The device according to one of Claims 1 to 7, **characterized in that** an evaporator and/or mixer (22) is fitted downstream of the supply for the reducing agent, preferably an evaporator and/or mixer (22) is arranged in the inlet pipe (14), said evaporator and/or mixer having a defined spacing to the inlet opening (15) and preferably being inserted at a point approximately 2/3 of the way along the pipe length of the inlet pipe (14) as viewed from the inlet opening (15).

9. The device according to one of Claims 1 to 8, **characterized in that** multiple, in particular circumferentially distributed bypass openings (14a) are formed on the inlet pipe (14).

10. The device according to one of Claims 1 to 9, **characterized in that** at least one further throttle point (17) for the inflowing exhaust gas is provided, upstream of the flow diversion region (15a) assigned to the inlet opening (15) and thus upstream of the reducing agent supply (13) and outside the inlet pipe (14), in the housing section (11b radially surrounding the inlet pipe (14).

11. The device according to Claim 9 or 10, **characterized in that** the throttle point (17) has a defined spacing to the inlet opening (15) of the inlet pipe (14) and/or to the at least one bypass opening (14a), and in particular is arranged approximately halfway between the at least one bypass opening (14a) and the inlet opening (15).

12. The device according to Claim 9, 10 or 11, **characterized in that** the throttle point (17) is formed by at least one cross-sectional constriction formed in an annular chamber (18) surrounding the inlet pipe (14), which cross-sectional constriction is formed in particular by an annular wall which leaves a throughflow gap free and/or by a perforated plate (16).

13. The device according to one of Claims 1 to 12, **characterized in that**, in the housing section (11b radially outside the inlet pipe (14), there is arranged at least one further gas-guiding pipe (19) which effects a meandering gas flow with multiple diversions of the exhaust-gas flow between the exhaust line (8), which opens in radially, and the reducing agent decomposition catalyst (9), or within the inflow path (10).

14. The device according to one of Claims 1 to 13, **characterized in that** the at least one further gas-conducting pipe (19) is fastened to a face wall (11a) of the housing section (11b) surrounding the inlet pipe (14), and/or runs substantially parallel to the inlet pipe (14), in particular has substantially the same cone angle as the inlet pipe (14), and/or **in that** the at least one further gas-guiding pipe (19) is formed by multiple pipes nested one inside the other and/or connected to one another, in particular by multiple conical pipes nested one inside the other and/or connected to one another.

15. The device according to one of Claims 1 to 14, **characterized in that** the supply (8') of the exhaust gas into the housing surrounding the inflow path (10) is performed at an oblique angle with respect to the housing, in particular not at a right angle with respect to the housing, and/or in a manner eccentrically offset with respect to housing central axes.

## Revendications

1. Dispositif de post-traitement de gaz d'échappement dans un système d'échappement de moteurs à combustion interne (1), en particulier de moteurs à combustion interne (1) pouvant fonctionner avec un mélange pauvre pour des véhicules automobiles, comprenant au moins un catalyseur de décomposition par agent réducteur (9) placé dans le flux de gaz d'échappement, en particulier un catalyseur à hydrolyse, et un dispositif de dosage disposé en amont par rapport à celui-ci dans une conduite de gaz d'échappement, pour l'alimentation en agent réducteur, en particulier pour l'alimentation en solution aqueuse d'urée, de préférence au moins un dispositif catalyseur supplémentaire, en particulier au moins un catalyseur RCS (6), étant placé en aval du catalyseur de décomposition par agent réducteur (9), une section d'afflux (10), comprenant au moins une région de déviation d'écoulement (15a, 15b), pour le gaz d'échappement étant placée en amont du catalyseur de décomposition par agent réducteur (9), laquelle section d'afflux est réalisée de telle sorte que le gaz d'échappement soit alimenté radialement à l'extérieur d'un tube d'entrée (14) se raccordant au catalyseur de décomposition par agent réducteur (9) dans une portion de boîtier (11a, 11b) entourant le tube d'entrée (14) et soit guidé jusqu'au catalyseur de décomposition par agent réducteur (9) dans le flux inverse par le biais d'une ouverture d'entrée frontale (15) du tube d'entrée (14), l'agent réducteur étant alimenté dans la région de déviation d'écoulement (15a) du flux de gaz d'échappement associée à l'ouverture d'entrée (15), **caractérisé en ce**
**qu'**au moins une ouverture de dérivation (14a) est réalisée au niveau du tube d'entrée (14).

2. Dispositif selon la revendication 1, **caractérisé en ce qu'**au moins un dispositif d'étranglement (17) pour l'étranglement ou la restriction du flux de gaz d'échappement est prévu dans la région de la section d'afflux (10) en amont de l'alimentation en agent réducteur.

3. Dispositif selon la revendication 1 ou 2, **caractérisé en ce que**, dans la région de la section d'afflux (10) en amont de l'alimentation en agent réducteur, la section transversale d'écoulement est inférieure à celle en aval de l'alimentation en agent réducteur, et/ou **en ce que** le volume d'écoulement dans la section d'afflux (10) à l'extérieur du tube d'entrée (14) est inférieure au volume d'écoulement à l'intérieur d'une région d'entrée définie du tube d'entrée. (14).

4. Dispositif selon l'une quelconque des revendications 1 à 3, **caractérisé en ce qu'**une buse (13) du dispositif de dosage pour l'alimentation en agent réducteur est disposée dans la région de déviation d'écoulement (15a) associée à l'ouverture d'entrée (15) et/ou est dirigée vers l'ouverture d'entrée (15), et il est de préférence prévu que la buse (13) soit disposée sur une paroi frontale (11a) de la portion de boîtier (11b) entourant le tube d'entrée (14), en regard de l'ouverture d'entrée (15) du tube d'entrée (14) à une distance définie (a), et/ou que la buse (13) soit, en termes de sa direction d'injection dans l'ouverture d'entrée (15) du tube d'entrée (14), disposée de manière coaxiale ou de manière décalée de façon excentrique par rapport à l'axe médian longitudinal (11c) du tube d'entrée (14).

5. Dispositif selon l'une quelconque des revendications 1 à 4, **caractérisé en ce qu'**au moins un moyen (15c), de préférence au moins une tôle de déviation, pour la déviation de l'écoulement et/ou l'augmentation de la turbulence, est prévu(e) ou monté(e) en aval de l'alimentation en agent réducteur.

6. Dispositif selon l'une quelconque des revendications 1 à 5, **caractérisé en ce qu'**il est de préférence prévu que l'au moins un moyen (15c) de déviation de l'écoulement et/ou d'augmentation de la turbulence soit réalisé ou disposé au moins dans certaines régions autour ou le long de l'ouverture d'entrée (15), et/ou que l'au moins un moyen (15c) de déviation de l'écoulement et/ou d'augmentation de la turbulence soit réalisé ou disposé de telle sorte que l'agent réducteur dosé en particulier au moyen d'une buse (13) ne soit pas en contact avec celui-ci.

7. Dispositif selon l'une quelconque des revendications 1 à 6, **caractérisé en ce que**, dans ces régions dans lesquelles une concentration d'agent réducteur ou une quantité d'agent réducteur élevée de manière définie est présente, la vitesse d'écoulement est, au moyen d'éléments rapportés et/ou de mesures faisant varier la section transversale, accrue par rapport à ces régions dans lesquelles une concentration d'agent réducteur ou une quantité d'agent réducteur plus faible par rapport à celle-ci est présente.

8. Dispositif selon l'une quelconque des revendications 1 à 7, **caractérisé en ce qu'**un évaporateur et/ou un mélangeur (22) est monté en aval de l'alimentation en agent réducteur, de préférence un évaporateur et/ou un mélangeur (22) est disposé dans le tube d'entrée (14), lequel évaporateur et/ou mélangeur est situé à une distance définie de l'ouverture d'entrée (15), de préférence est inséré à approximativement 2/3 de la longueur de tube du tube d'entrée (14), vu depuis l'ouverture d'entrée (15).

9. Dispositif selon l'une quelconque des revendications 1 à 8, **caractérisé en ce que** plusieurs ouvertures de dérivation (14a) en particulier réparties sur la périphérie sont réalisées sur le tube d'entrée (14).

10. Dispositif selon l'une quelconque des revendications 1 à 9, **caractérisé en ce qu'**au moins un point d'étranglement supplémentaire (17) pour le gaz d'échappement affluant est prévu dans la portion de boîtier (11b) entourant radialement le tube d'entrée (14), en amont de la région de déviation d'écoulement (15a) associée à l'ouverture d'entrée (15) et par conséquent en amont de l'alimentation en agent réducteur (13) ainsi qu'à l'extérieur du tube d'entrée (14).

11. Dispositif selon la revendication 9 ou 10, **caractérisé en ce que** le point d'étranglement (17) est situé à une distance définie de l'ouverture d'entrée (15) du tube d'entrée (14) et/ou de l'au moins une ouverture de dérivation (14a), en particulier à approximativement mi-distance entre l'au moins une ouverture de dérivation (14a) et l'ouverture d'entrée (15).

12. Dispositif selon la revendication 9, 10 ou 11, **caractérisé en ce que** le point d'étranglement (17) est formé par au moins une constriction de section transversale réalisée dans un espace annulaire (18) entourant le tube d'entrée (14), laquelle constriction de section transversale est formée en particulier par une paroi annulaire laissant libre un interstice d'écoulement et/ou par une tôle perforée (16).

13. Dispositif selon l'une quelconque des revendications 1 à 12, **caractérisé en ce qu'**au moins un tube de guidage de gaz supplémentaire (19) est disposé dans la portion de boîtier (11b) radialement à l'extérieur du tube d'entrée (14), lequel tube de guidage de gaz provoque un écoulement de gaz en méandres avec de multiples déviations du flux de gaz d'échappement entre la conduite de gaz d'échappement (8) débouchant radialement et le catalyseur de décomposition par agent réducteur (9) ou à l'intérieur de la section d'afflux (10).

14. Dispositif selon l'une quelconque des revendications 1 à 13, **caractérisé en ce que** l'au moins un tube de guidage de gaz supplémentaire (19) est fixé à une paroi frontale (11a) de la portion de boîtier (11b) entourant le tube d'entrée (14) et/ou s'étend essentiellement parallèlement au tube d'entrée (14), en particulier présente un angle de cône essentiellement identique à celui du tube d'entrée (14), et/ou **en ce que** l'au moins un tube de guidage de gaz supplémentaire (19) est formé par plusieurs tubes emboîtés les uns dans les autres et/ou reliés les uns aux autres, en particulier par plusieurs tubes coniques emboîtés les uns dans les autres et/ou reliés les uns aux autres.

15. Dispositif selon l'une quelconque des revendications 1 à 14, **caractérisé en ce que** l'alimentation (8') du gaz d'échappement dans le boîtier entourant la section d'afflux (10) s'effectue de manière inclinée par rapport au boîtier suivant un angle, en particulier ne s'effectue pas à angle droit par rapport au boîtier, et/ou s'effectue de manière décalée de façon excentrique par rapport aux axes médians du boîtier.
